(19) Europäisches Patentamt / European Patent Office / Office européen des brevets

(11) **EP 2 287 473 B1**

(12) **FASCICULE DE BREVET EUROPEEN**

(45) Date de publication et mention
de la délivrance du brevet:
**05.03.2014   Bulletin 2014/10**

(51) Int Cl.:
***F16B 2/14*** *(2006.01)*

(21) Numéro de dépôt: **09168211.2**

(22) Date de dépôt: **19.08.2009**

(54) **Système de fixation d'une patte mobile dans une coulisse fixe**

Befestigungssystem einer beweglichen Lasche in einer festen Gleitschiene

System for fixing a mobile tab in a fixed slide

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(43) Date de publication de la demande:
**23.02.2011   Bulletin 2011/08**

(73) Titulaire: **LISI Automotive Rapid
95650 Puiseux-Pontoise (FR)**

(72) Inventeur: **Viennois, Fabien
92800, PUTEAUX (FR)**

(74) Mandataire: **Thinat, Michel
Cabinet Weinstein
56 A, rue du Faubourg Saint-Honoré
75008 Paris (FR)**

(56) Documents cités:
**DE-U1- 9 216 608      FR-A1- 2 934 334
US-A- 3 709 546**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un système de fixation d'une patte mobile dans une coulisse fixe, munie d'un dispositif de blocage de la patte dans la coulisse en réponse à des forces de retrait de la patte, dans le sens opposé à la direction de l'insertion.

Le document US 3,709,546 montre un système de fixation connu.

Actuellement, il n'existe pas de système de ce type, dont le dispositif de blocage est à la fois efficace et d'une structure simple et facile à manier.

L'invention a pour but de pallier cet inconvénient.

Pour atteindre ce but, le système de fixation selon l'invention est **caractérisé en ce que** les faces internes de glissement de la coulisse sont lisses, que la patte comporte une partie aux bords inclinés dont la largeur diminue progressivement de l'avant à l'arrière et qui comporte au moins un bord longitudinal incliné d'un angle (α) prédéterminé par rapport à la face interne de glissement, et en ce que le dispositif de blocage comporte au moins une agrafe de blocage en forme d'un coin insérable entre ladite face interne de la coulisse et le bord incliné de la patte, qui est pourvu de moyens de maintien sans jeu de l'agrafe entre la coulisse et la patte.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :

- les figures 1 à 3 sont des vues schématiques du système de fixation à coulisse, patte et agrafe de blocage de la patte dans la coulisse, selon l'invention, illustrant trois étapes différentes et significatives du fonctionnement de ce système ;
- la figure 4 est une vue en perspective de l'ensemble formé par la patte et ses agrafes de blocage selon l'invention ;
- la figure 5 est une vue en perspective d'un premier mode de réalisation d'une agrafe selon l'invention ;
- la figure 6 est une vue en direction de la flèche VI de la figure 4;
- la figure 7 illustre un deuxième mode de réalisation de l'ensemble formé par la patte et les agrafes de blocage selon l'invention ;
- la figure 8 est une vue éclatée illustrant les agrafes de blocage du second mode de réalisation selon la figure 7 ;
- la figure 9 est une vue en perspective d'une agrafe de blocage selon la figure 8, et
- les figures 10A et 10B sont des schémas explicatifs du fonctionnement du dispositif de blocage selon l'invention.

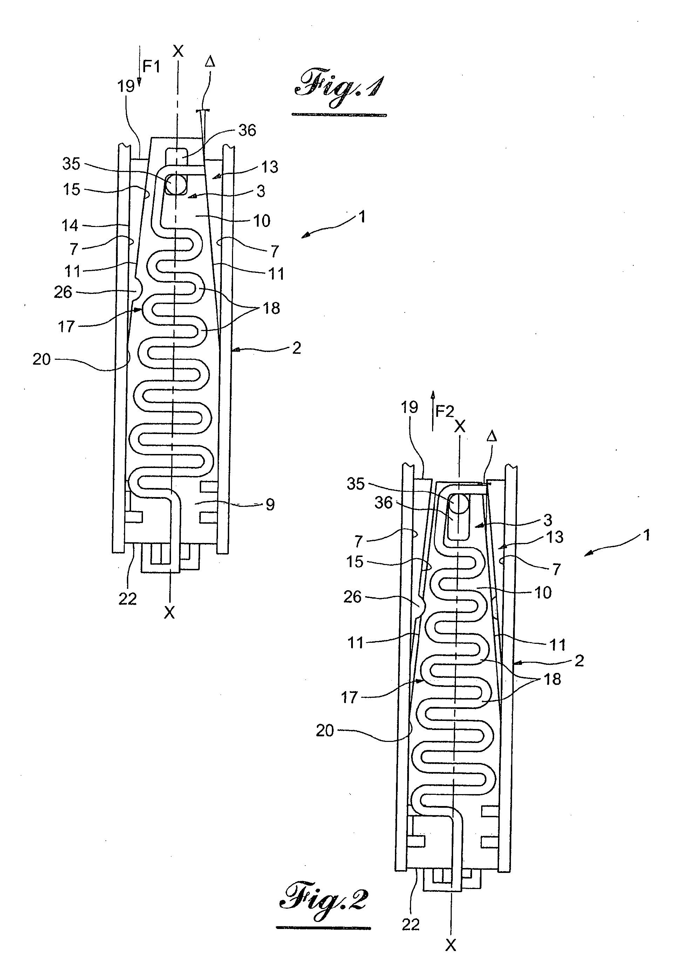

Conformément à la vue schématique de la figure 1, le système de fixation selon l'invention désigné par la référence générale 1 comporte essentiellement une coulisse 2, une patte 3 configurée pour être insérée dans la coulisse 2, comme cela est illustré par la flèche F1, et un dispositif de blocage 4 de la patte 3 dans la coulisse 2, configurée pour s'opposer au retrait de la patte sous l'effet d'une force F2 agissant dans la direction opposée à la direction d'insertion F1.

La coulisse 2 est avantageusement formée, de façon connue en soi, par un profilé délimitant un canal 6 dont les faces latérales 7 dans lesquelles la patte 3 est susceptible de glisser sont parallèles et lisses. La patte 3 comporte une partie avant 9 d'une largeur légèrement inférieure à l'écart des parois internes de glissement 7 de la coulisse, afin de permettre le coulissement de la patte dans ce canal, ainsi qu'une partie arrière 10 aux bords inclinés 11 de façon symétrique par rapport à l'axe longitudinal X-X, de façon que la largeur de la patte dans cette partie diminue progressivement à partir de la partie avant 9 en direction de l'extrémité arrière. Les deux bords longitudinaux 11 en regard des faces de glissement 7 de la coulisse sont donc inclinés par rapport à l'axe X-X et les faces 7, selon un angle prédéterminé α.

Le dispositif de blocage 4 comporte deux agrafes 13 en forme de coins de blocage susceptibles d'être insérés chacun entre un bord longitudinal incliné 11 de la patte et la face interne 7 en regard de la coulisse 2. A cette fin, chaque coin comporte une surface longitudinale extérieure 14 qui est parallèle à la face 7 de la coulisse et une face interne 15 qui est inclinée selon l'angle α, mais de façon inverse par rapport à la face adjacente 11 de la patte de façon que, à l'état inséré, la face 14 puisse s'appliquer à la face 7 de la coulisse et la face 15 à la face 11 de la patte. Selon une caractéristique essentielle de l'invention, le dispositif de blocage 4 est pourvu de moyens de ressort 17 de rappel du dispositif dans une position dans laquelle tout jeu entre la coulisse 2, les coins de blocage et la patte 3 est exclu.

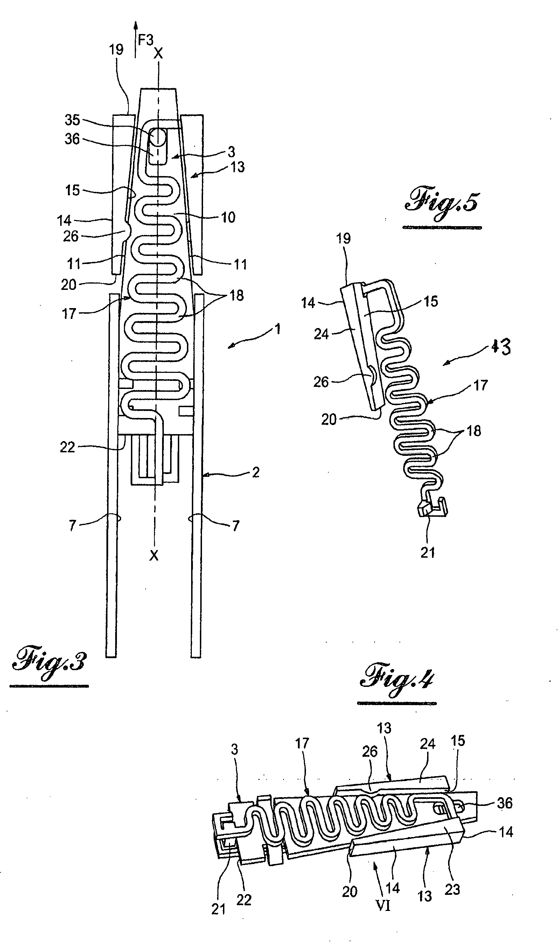

Selon un premier mode de réalisation du dispositif de blocage 4, illustré aux figures 4 à 6, les moyens de ressort 17 sont intégrés, c'est-à-dire chaque agrafe 13 en forme de coin est pourvue d'un ressort 17, l'agrafe 13 et le ressort 17 étant réalisés en une pièce avantageusement en matière plastique. Comme le montre notamment la figure 5, la partie de ressort 17 est formée par une suite d'une pluralité de méandres 18 chacun en forme d'un U, solidaire par une extrémité de l'extrémité arrière 19 plus large du coin correspondant. Le ressort s'étend dans la direction axiale du système au-delà de l'autre extrémité 20 du coin 13 et comporte à son extrémité libre une saillie de butée 21 destinée à venir en prise derrière l'extrémité avant 22 de la patte 3 comme on le voit clairement sur la figure 4.

La figure 5 montre que le raccordement à l'extrémité 19 du coin se fait au niveau d'une face latérale 23 du coin. Celui-ci est pourvu, à proximité de son extrémité opposée 20 au niveau de son autre face latérale 24, d'une saillie 26 de guidage de façon que, lors de la mise en place de chaque coin sur un bord incliné de la patte, ce bord soit pris entre le ressort 17 et la saillie de guidage 26. Grâce à cette configuration de la partie ressort 17 et du coin de chaque agrafe, celle-ci peut être prémontée sur la patte. Comme on le voit sur les figures, à l'état prémonté, la patte est disposée entre les deux parties de ressort et des saillies. Du fait que les extrémités libres des ressorts viennent en prise derrière l'extrémité avant 24 de la patte, les deux agrafes sont retenues chacune sur un bord incliné 17 de la partie conique arrière de la patte.

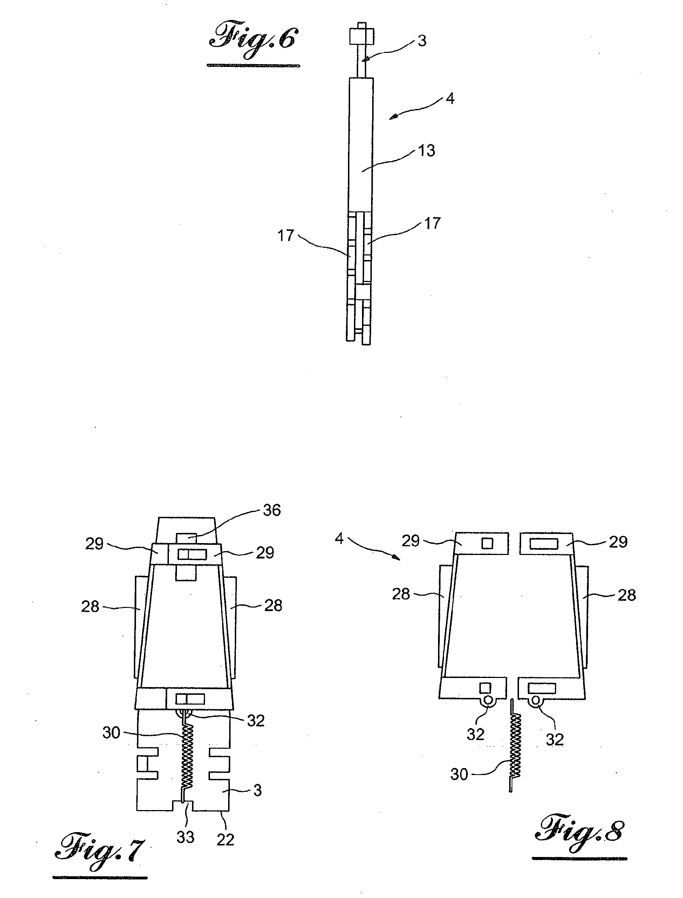

Selon un second mode de réalisation illustré aux figures 7 à 9, les moyens de ressort sont rapportés à un dispositif d'agrafes composé des deux agrafes 28, 29. Chaque agrafe comporte une partie de coin 28 entre deux parties de fixation 29, chacune en forme d'un U. A l'état monté du dispositif par engagement des parties en U des deux agrafes de la manière ressortant des figures 7 et 8, les parties en U sont réunies et un ressort hélicoïdal 30 est interposé entre un oeillet de fixation 32 de la partie de fixation avant 29 et entre un endroit central en retrait 33 de l'extrémité avant de la patte.

Il ressort de la description qui vient d'être faite, de la structure du système de fixation selon l'invention, que cette dernière présente l'avantage majeur de permettre le prémontage du dispositif de blocage 4 sur la patte 3 avant l'insertion de celle-ci dans la coulisse 2. A cette fin, il suffit de placer les deux agrafes sur les bords inclinés de la patte et d'assurer le maintien des agrafes sur la patte grâce au moyen de ressort dont l'extrémité libre est solidarisée de l'extrémité avant 22 de la patte, ce qui implique une très légère mise en tension du moyen de ressort, qui supprime tout jeu entre les agrafes et la patte. Puis l'ensemble formé par les agrafes et la patte est inséré dans la coulisse jusqu'à la position souhaitée. La patte reste bloquée dans cette position grâce aux agrafes en forme de cône qui s'opposent à tout effort de retrait en se coinçant entre les parois de la coulisse et la partie conique de la patte. Un tel retrait n'est possible qu'après avoir préalablement fait décoller les agrafes de la partie conique de la patte. Le jeu entre les agrafes et la patte, nécessaire au retrait, peut être créé en tirant le dispositif d'agrafes légèrement en arrière sur la patte, à l'encontre des moyens de ressort de maintien, par exemple à l'aide d'un tournevis 35 que l'on introduit dans une fenêtre 36 prévue à cette fin dans la partie arrière de la patte. Dans le cas du dispositif d'agrafe à ressort intégré, le tournevis peut être introduit dans une fenêtre en dessous de l'extrémité supérieure des ressorts et dans le cas du dispositif d'agrafe à ressort rapporté en dessous des branches en U supérieures 29 du dispositif d'agrafe. C'est en déplaçant le tournevis 35 en direction de la flèche F2 sur la figure 1 que le dispositif d'agrafe peut être amené à décoller de la patte, ce qui permet le retrait de celle-ci, comme l'illustre la flèche F3 de la figure 3.

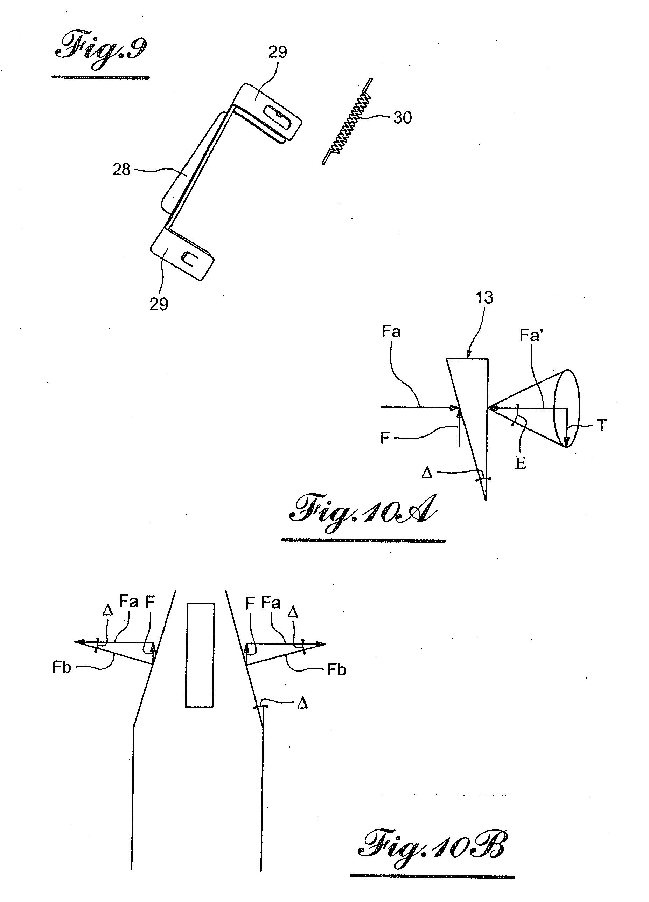

Les figures 10A et 10B illustrent les conditions qui doivent être réalisées pour assurer le blocage de la patte à l'intérieur de la coulisse, grâce aux agrafes en forme de coin dont l'une est représentée schématiquement sur la figure 10B. En réaction à un effort de retrait exercé sur la patte (figure 10A), la force F qui en résulte sur chaque surface d'appui incliné de la patte a une composante Fb normale à cette surface d'appui et une composante Fa perpendiculaire à la force F. La relation entre les forces F et Fa est exprimée par l'équation :

$$F = Fa \times \tan\alpha.$$

En considérant les agrafes coniques dont une est sur la figure 10B, la force Fa agissant sur l'agrafe produit la force de réaction F'a, qui doit être égale à la force Fa pour que l'agrafe reste immobile. Pour qu'il n'y ait pas de glissement axial de l'agrafe, la force F doit être inférieure ou égale à la force T opposée par le frottement entre l'agrafe et la coulisse. La figure 10b illustre l'angle de frottement β défini par l'équation

$$T = F'a \times \tan\beta$$

β étant l'angle du cône de frottement.
La condition F ≤ T a pour conséquence les relations suivantes :

$$Fa \times \tan\alpha \leq F'a \times \tan\beta$$

$$Fa.\tan\alpha \leq Fa.\tan\beta$$

$$\tan\alpha \leq \tan\beta.$$

Par conséquent, pour qu'il n'y ait pas de glissement, l'angle α doit être choisi de façon que celui-ci soit inférieur à l'angle β du coefficient de frottement entre l'agrafe et la coulisse. Bien entendu, ces relations ne sont valables qu'à la condition qu'il y ait placage entre la coulisse et les agrafes, d'une part, et les agrafes et la patte, d'autre part. Conformément à l'invention, cette condition est assurée par les ressorts interposés entre la patte et le dispositif d'agrafe.

Il ressort de ce qui précède, que l'invention présente de nombreux avantages majeurs par rapport à l'état de la technique. Le temps de montage de la patte sur la coulisse est très faible. Il n'y a pas besoin de découper des formes dans la coulisse dont les faces de glissement peuvent alors être lisses. L'effort de montage est faible et l'effort d'arrachement très important. Le montage peut se faire sans outil. Le démontage ne nécessite qu'un outil simple tel qu'un tournevis. Le dispositif de fixation selon l'invention peut être utilisé avantageusement pour le maintien de la patte de support moteur de volet roulant avec les coulisses où vient glisser le volet. Cependant, l'invention peut être utilisée dans tout type d'industrie, chaque fois qu'il est nécessaire de maintenir un élément qui rentre dans une coulisse, sans forme pour s'accrocher, et où le sens de montage est l'inverse du sens d'arrachement.

**Revendications**

1. Système de fixation (1) d'une patte (3) mobile dans une coulisse (2) fixe, le système de fixation (1) comprenant la patte (3), la coulisse (2) et un dispositif de blocage (4) de la patte (3) dans la coulisse (2) en réponse à des forces de retrait de la patte (3), dans le sens opposé à la direction de l'insertion de la patte (3) dans la coulisse (2), les faces internes de glissement (7) de la coulisse (2) étant lisses, et la patte (3) comportant une partie (10) à deux bords inclinés (11) dont la largeur diminue progressivement de l'avant à l'arrière et qui comporte deux bords longitudinaux (11) inclinés d'un angle ($\alpha$) prédéterminé par rapport à la face interne de glissement (7), ledit dispositif de blocage (4) comportant deux agrafes (13) en forme de coin, chacune insérée entre un bord incliné (11) et la face de glissement (7) en regard de la coulisse (2), le dispositif de blocage (4) comprenant des moyens de maintien sans jeu des agrafes (13) entre la coulisse (2) et la patte (3), ces moyens de maintien sans jeu précité comportant des moyens de ressort (17, 30) de rappel des agrafes (13) dans une position dans laquelle tout jeu entre la coulisse (2), les agrafes (13) et la patte (3) est exclu, les deux agrafes étant solidarisées en formant un dispositif d'agrafes, **caractérisé en ce que** le jeu entre les agrafes (13) et la patte (3), nécessaire au retrait, peut être créé en tirant le dispositif d'agrafes en arrière sur la patte (3) à l'encontre des moyens de ressort (17,30).

2. Système selon la revendication 1, **caractérisé en ce qu'**un ressort de rappel (17) est associé à chaque agrafe.

3. Système selon la revendication 2, **caractérisé en ce que** le ressort (17) est intégré à l'agrafe (13) et disposé entre celle-ci et la patte (3), de façon à produire entre l'agrafe et la patte une force axiale de rappel dans la position sans jeu précitée.

4. Système selon la revendication 3, **caractérisé en ce que** le ressort (17) s'étend entre l'arrière de l'agrafe et l'avant de la patte.

5. Système selon la revendication 1, **caractérisé en ce que** les moyens de ressort sont réalisés sous forme d'un ressort rapporté (30) disposés entre le dispositif d'agrafes et l'avant de la patte pour assurer le maintien sans jeu précité.

6. Système selon l'une des revendications 1 à 5, **caractérisé en ce que** l'angle d'inclinaison ($\alpha$) est inférieur à l'angle ($\beta$) de frottement entre une agrafe et la coulisse.

7. Système selon l'une des revendications 1 à 5, **caractérisé en ce que** la patte (3) est susceptible d'être retirée après un mouvement de retrait provocant le décollage de l'agrafe de la patte et de la coulisse.

8. Système selon l'une des revendications 1 à 7, **caractérisé en ce que** l'agrafe (13) est susceptible d'être prémontée sur la patte.

**Patentansprüche**

1. Befestigungssystem (1) einer beweglichen Lasche (3) in einer festen Gleitschiene (2), wobei das Befestigungssystem (1) die Lasche (3), die Gleitschiene (2) und eine Blockiervorrichtung (4) der Lasche (3) in der Gleitschiene (2) als Antwort auf Rückzugskräfte der Lasche (3) in die entgegengesetzte Richtung zur Einsetzrichtung der Lasche (3) in die Gleitschiene (2) umfasst, wobei die inneren Gleitseiten (7) der Gleitschiene (2) glatt sind und die Lasche (3) einen Teil (10) mit zwei geneigten Rändern (11) aufweist, dessen Breite schrittweise von vorn nach hinten abnimmt und der zwei im Verhältnis zu der inneren Gleitseite (7) in einem vorbestimmten Winkel ($\alpha$) geneigte Längsränder (11) aufweist, wobei die Blockiervorrichtung (4) zwei keilförmige Klammern (13) aufweist, wobei jede zwischen einem geneigten Rand (11) und der Gleitseite (7) gegenüber der Gleitschiene (2) eingesetzt ist, wobei die Blockiervorrichtung (4) Haltemittel ohne Spiel der Klammern (13) zwischen der Gleitschiene (2) und der Lasche (3) umfasst, wobei diese vorgenannten Haltemittel ohne Spiel Rückhol-Federmittel (17, 30) der Klammern (13) in eine Position aufweisen, in der jegliches Spiel zwischen der Gleitschiene (2), den Klammern (13) und der Lasche (3) ausgeschlossen ist, wobei die zwei Klammern verbunden sind, indem sie eine Klammervorrichtung bilden, **dadurch gekennzeichnet, dass** das Spiel zwischen den Klammern (13) und der Lasche (3), das für den Rückzug notwendig ist, durch Ziehen der Klammervorrichtung nach hinten über die Lasche (3) gegen die Federmittel (17, 30) ausbildbar ist.

2. System nach Anspruch 1, **dadurch gekennzeichnet, dass** jeder Klammer eine Rückholfeder (17) zugeordnet ist.

**3.** System nach Anspruch 2, **dadurch gekennzeichnet, dass** die Feder (17) in die Klammer (13) integriert ist und zwischen dieser und der Lasche (3) derart angeordnet ist, dass zwischen der Klammer und der Lasche eine axiale Rückholkraft in die vorgenannte Position ohne Spiel erzeugt wird.

**4.** System nach Anspruch 3, **dadurch gekennzeichnet, dass** sich die Feder (17) zwischen der Rückseite der Klammer und der Vorderseite der Lasche erstreckt.

**5.** System nach Anspruch 1, **dadurch gekennzeichnet, dass** die Federmittel in Form einer aufgesetzten Feder (30) ausgebildet sind, die zwischen der Klammervorrichtung und der Vorderseite der Lasche angeordnet sind, um den vorgenannten Halt ohne Spiel sicherzustellen.

**6.** System nach einem der Ansprüche 1 bis 5, **dadurch gekennzeichnet, dass** der Neigungswinkel (α) kleiner ist als der Reibungswinkel (β) zwischen einer Klammer und der Gleitschiene.

**7.** System nach einem der Ansprüche 1 bis 5, **dadurch gekennzeichnet, dass** die Lasche (3) nach einer Rückzugbewegung, die das Lösen der Klammer von der Lasche und von der Gleitschiene bewirkt, herausnehmbar ist. □

**8.** System nach einem der Ansprüche 1 bis 7, **dadurch gekennzeichnet, dass** die Klammer (13) auf der Lasche vormontierbar ist.

**Claims**

**1.** A system (1) for fastening a mobile tab (3) in a fixed slide (2), the fixing system (1) comprising the tab (3), the slide (2) and a device (4) for blocking the tab (3) in the slide (2) in response to withdrawal forces of the tab (3), in the direction opposite the insertion direction of the tab (3) into the slide (2), the inner sliding faces (7) of the slide (2) being smooth, and the tab (3) including a part (10) with two inclined edges (11) whereof the width decreases gradually from front to back and which includes two longitudinal edges (11) inclined by a predetermined angle (α) relative to the inner sliding face (7), said blocking device (4) including two corner-shaped staples (13), each inserted between an inclined edge (11) and the sliding face (7) across from the slide (2), the blocking device (4) comprising means for maintaining the staples (13) without play between the slide (2) and the tab (3), these aforementioned maintaining means without play including spring means (17, 30) for returning the staples (13) to a position in which any play between the slide (2), the staples (13) and the tab (3) is excluded, the two staples being secured while forming a staple device, **characterized in that** the play between the staples (13) and the tab (3), necessary for the withdrawal, can be created by pulling the staple device backward from the tab (3) against spring means (17, 30).

**2.** The system according to claim 1, **characterized in that** a return spring (17) is associated with each staple.

**3.** The system according to claim 2, **characterized in that** the spring (17) is integrated into the staple (13) and positioned between the latter and the tab (3), so as to produce an axial return force into the aforementioned position without play between the staple and the tab.

**4.** The system according to claim 3, **characterized in that** the spring (17) extends between the rear of staple and the front of the tab.

**5.** The system according to claim 1, **characterized in that** the spring means are made in the form of an attached spring (30) positioned between the staple device and the front of the tab to provide the aforementioned maintenance without play.

**6.** The system according to one of claims 1 to 5, **characterized in that** the incline angle (α) is smaller than the friction angle (β) between a staple and the slide.

**7.** The system according to one of claims 1 to 5, **characterized in that** the tab (3) can be withdrawn after a withdrawal movement causing the staple to become unstuck from the tab and the slide.

**8.** The system according to one of claims 1 to 7, **characterized in that** the staple (13) can be pre-mounted on the tab.

*Fig.1*

*Fig.2*

_Fig.3_

_Fig.5_

_Fig.4_

_Fig.6_

3

4

13

17   17

_Fig.7_

36

29   29

28   28

32

30

3

22

33

_Fig.8_

4

29   29

28   28

32   32

30

8

_Fig.9_

29

28

30

29

_Fig.10A_

Fa

13

Fa'

F

T

E

Δ

Fa F

F Fa

Δ

Δ

Fb

Fb

Δ

_Fig.10B_

## EP 2 287 473 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3709546 A